# EUROPÄISCHE PATENTSCHRIFT

(11) **EP 1 102 381 B1**
(45) Veröffentlichungstag und Bekanntmachung des Hinweises auf die Patenterteilung: **15.07.2009**
(21) Anmeldenummer: 00123596.9
(22) Anmeldetag: 28.10.2000
(51) Int. Cl.: H02J 7/14

(54) **Spannungsregelung für den Drehstromgenerator eines Kraftfahrzeuges**
Voltage regulator for the alternator of a vehicle
Régulateur de tension pour un alternateur d'un véhicule

(30) Priorität: 20.11.1999 DE 19956007
(43) Veröffentlichungstag der Anmeldung: 23.05.2001
(73) Patentinhaber: MAN Nutzfahrzeuge Aktiengesellschaft, 80976 München (DE)
(72) Erfinder: Spaderna, Josef, Dipl.-Ing, 85258 Weichs (DE); Eisermann, Günter, 85757 Karlsfeld (DE); Kreutmair, Josef, 85276 Pfaffenhofen (DE)

(56) Entgegenhaltungen:
- DE-A- 19 654 330
- DE-A- 19 745 849
- US-A- 5 079 496

## Beschreibung

Die Erfindung betrifft eine Spannungsregelung für einen Drehstromgenerator nach dem Oberbegriff des Anspruchs 1.

Aus der DE 196 54 330 A1 ist ein Multifunktionsregler mit einem Leistungs- und einem Steuerchip, die miteinander verbindbar sind, bekannt. Die genannten Chipsar-ten sind individuell an spezielle Erfordernisse anpaßbar, so daß in einer äußerlich baugleichen Ausführung weitgreifende Fahrzeugbaureihen bedienbar sind. Die Regelung des Erregerstromes des Generators ist von der Ausgangsspannung B+ als Führungungsgröße (z. B. 28,4 V für Nutzfahrzeuge, ist aber in der oben genannten Schrift nicht angegeben) und einer Temperaturkorrekturkurve, TK-Bildung (Anspruch 9) genannt, mit der die Ausgangsspannung B+ abhängig von der Generatortemperatur im Mulitfunktionsregler rechnerisch verringert oder erhöht und als neue Steuergröße für die Generatorregelung verwendet wird. Dadurch wird der Akkumulator, abhängig von der Generatortemperatur, mit der entsprechenden Spannung beaufschlagt und entsprechend geladen.

Aus der DE 197 45 849 A1 ist eine Einrichtung zur Energieverteilung in einem Kraftfahrzeug bekannt. Ein Bordnetzmanager (BN-Manager) regelt dabei eine Bordnetzspannung so, daß mittels der Bordnetzistspannung als Regelgröße eine vorgegebene Bordnetzsollspannung möglichst eingehalten wird. Zur Einhaltung der Bordnetzsollspannung wird durch den BN-Manager zunächst der Erregerstrom für den Generator geregelt, es kann aber auch im ungünstigen Fall die Drehzahl des Verbrennungsmotors, z. B. im Stau, angehoben werden. Die Einrichtung hat bei mehreren Betriebszuständen des Fahrzeuges einen erhöhten Treibstoffverbrauch zur Folge.

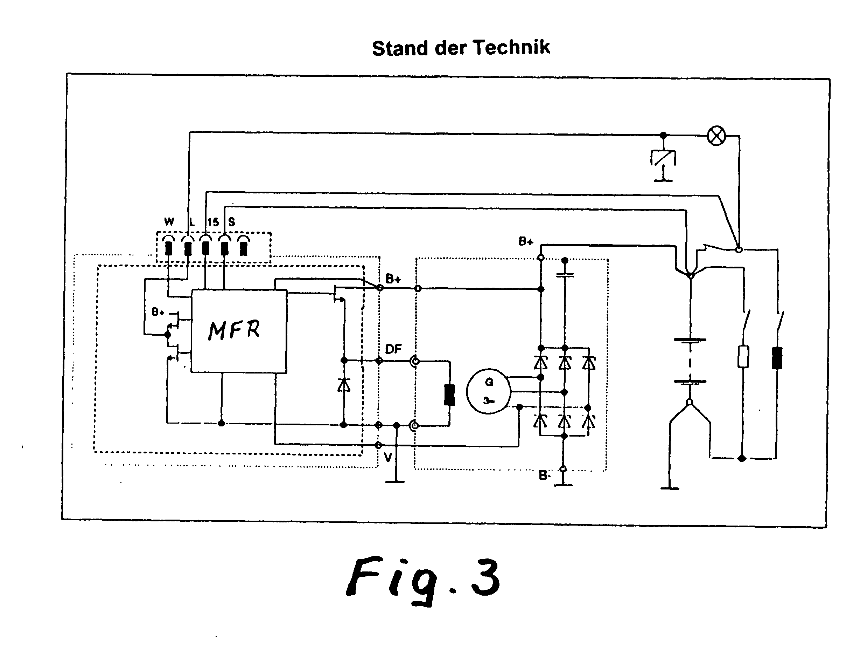

Den Stand der Technik, wie der Anmelder sie in seinen Fahrzeugen verwendet, ist in der Fig. 3 gezeigt. In diesem Anwendungsfall wird die Akkumulatorspannung als Führungsgröße für die Regelung des Spannungsausganges B+ des Generators verwendet. Abhängig von der Generatortemperatur mit Multifunktionsregler (ist eine Baueinheit) ist eine TK-Bildung im Multifunktionsregler abgelegt, mit der bei niedrigen Temperaturen die Sollspannungsführungsgröße für die Ausgangsspannung B+ am Generator erhöht und bei höheren Temperaturen erniedrigt wird, damit der Akkumulator in beiden Fällen richtig geladen werden soll.

Bei den Gegenständen der Druckschriften wie auch bei dem genannten Gegenstand des Anmelders haben die Regelungen bei Anwendung in Nutzfahrzeugen den Nachteil, daß die Generatortemperatur für die TK-Bildung herangezogen wird. Der Akkumulator ist aber in fast allen Fällen nicht im Motorraum, sondern z. B. hinter dem Fahrerhaus eines Lkw an dessen Rahmen.

Aber auch bei anderen Fahrzeugen wie Pkw, Kleinlastwagen, Kleinbussen kann der Akkumulator außerhalb des Motorraumes angeordnet sein.

In den genannten Fällen unterscheiden sich die Generatortemperatur von der Akkumulatortemperatur um so mehr, je länger die ununterbrochene Betriebsdauer des Verbrennungsmotors ist. Die Spannungsregelung wird damit besonders für den Akkumulator immer mehr unangepaßt.

Der Erfindung liegt die Aufgabe zugrunde, eine für Kraftfahrzeuge passende Regelung der Generatorspannung darzustellen.

Die Aufgabe wird erfindungsgemäß durch die Merkmale des Anspruchs 1 gelöst.

Durch den zentralen Bordrechner (ZBR) wird die Spannungsvorgabe Bₛₑₙ dem Multifunktionsregler (MFR) vorgegeben bzw. "vorgetäuscht". Die Regelung der Generatorspannung B+, kann bezogen auf den Fahrzeugtyp und den Betriebseinsatz, flexibel gestaltet werden. Dadurch kann wiederum die Akkumulatorlebensdauer erheblich verlängert und der Energiebedarf für die Stromversorgung des Fahrzeuges minimiert werden.

Der ZBR hat Zugriff auf viele Daten im Fahrzeug, wie z. B. Außentemperatur, Bord-, Generator- und Akkumulatorspannung, Dauer des Motorbetriebes seit dem letzten Startvorgang, Motordrehzahlbereich, in welchem der Motor meistens und wie lange er dort betrieben wurde oder ob er noch in diesem Drehzahlbereich betrieben wird, die er als Signale zur Verfügung stellen kann.

Außerdem können im ZBR fahrzeugspezifische Daten wie z. B. unterschiedliche Widerstände der elektrischen Leitungen zwischen Akkumulator und Generator berücksichtigt werden.

Durch die flexible Regelung der Generatorspannung, die bei einer 24 V-Anlage in einem Regelbereich von beispielsweise 20 V bis 32 V variiert werden kann, können folgende Vorgänge durchgeführt werden:
a) eine zutreffende Spannungsabgabe B+ am Generatorausgang durch Erfassen der Akkumulatortemperatur in Abhängigkeit von der Außentemperatur oder der direkt gemessenen Akkumulatortemperatur,
b) eine schnelle Aufladung des Akkumulators nach dem Motorstart,
c) eine Absenkung der Bordnetz- und Akkumulatorspannung, wenn der Verbrennungsmotor z. B. mehr als 20 Minuten ununterbrochen in Betrieb ist,
d) ein bewußtes Entladen des Akkumulators durch Absenken der Generatorspannung B+ auf den zulässigen untersten Spannungswert von z. B. 20 V, wenn der Verbrennungsmotor länger als z. B. 60 Minuten in Betrieb ist und dann, nach z. B. weiteren 120 Minuten, ein Aufladen des Akkumulators durch Anheben der Generatorspannung B+ auf beispielsweise 28 V, abhängig von der (Außen-) Akkumulatortemperatur,
e) ein Absenken der Generatorspannung B+, abhängig von den eingeschalteten Verbrauchern, um z. B. die Leuchtmittel zu schonen,
f) eine entsprechende Spannungsanpassung, wenn zwischen Akkumulator und Generator unterschiedliche Leitungswiderstände durch die Art oder Ausführung des Fahrzeuges gegeben sind.

### Wirkungen der Vorgänge:

Zu a) Durch die Spannungsbeeinflussung, abhängig von der Akkumulatortemperatur oder einer von der Außentemperatur abgeleiteten Akkumulatortemperatur, ist eine wesentlich bessere Bestimmung der Sollspannung B+ am Generatorausgang bzw. eine entsprechende Eingabe von Bₛₑₙ in den MFR möglich. Im Stand der Technik wird auf eine konstante Sollspannung B+ von z. B. 28,4 V (bei 24 V-Anlage), die als Führungsgröße dient und die mit einer TK-Bildung verändert wird, geregelt. Die TK-Bildung berücksichtigt die Temperatur des MFR beispielsweise so, daß bei einer MFR-Temperatur von +25°C (298 K) die Führungsgröße 28,4 V bleibt und bei einer Temperaturänderung von 1 K um 14 mV verändert wird:
   - bei unter +25°C erhöht sich die Sollspannung,
   - bei über +25°C erniedrigt sich die Sollspannung.
   Die Regelung, Stand der Technik, mag beim Start des kalten Motors richtig sein, jedoch mit steigender Betriebszeit wird die Vorgabe einer Sollspannung, auch mit TK-Bildung, zumindest bei Kraftfahrzeugen, die den Akkumulator nicht im Motorraum haben, zunehmend ungenau bis unbrauchbar, da die MFR-Temperatur abhängig von der Generatorleistungsabgabe und von der Motorraumtemperatur ist und der Akkumulator beispielsweise am Rahmen außerhalb des Motorraumes befestigt ist.
   Es kann z. B. vorkommen, daß bei -10°C Außentemperatur eine Generatorausgangsspannung von 29 V geregelt werden sollte, während der MFR aufgrund seiner gemessenen Temperatur einen Wert von 27,5 V am Generatorausgang einregelt. Damit fehlen dem Akkumulator 1,5 V, dieser wird nicht vollständig geladen und damit schneller unbrauchbar sein.
   Aber auch im Bereich über +25°C Außentemperatur kann der MFR, abhängig von der Betriebsdauer, der Fahrzeuggeschwindigkeit und der Generatorleistung eine höhere Temperatur erreichen, als der Akkumulator. In dem genannten Vorgang wird dann eine zu niedrige Generatorausgangsspannung B+ eingeregelt, wodurch der Akkumulator ebenfalls nicht optimal geladen wird.
   Ein namhafter Hersteller von Generatoren berücksichtigt zusätzlich als Regeltemperatur eine aus dem Akkumulatorausgang zurückgeführte Spannung (Fig. 3) für den MFR-Eingang mit der Absicht, den Spannungsabfall zwischen Akkumulator und Generatorregler zu kompensieren. Da aber Akkumulatorspannung und Betriebstemperatur des MFR nicht korrelierbar sind, ergeben sich für die Akkumulatorlebensdauer immer noch die gleichen Nachteile, wie bei anderen handelsüblichen Reglern.
   Bei der erfindungsgemäßen Spannungsbeeinflussung durch den Bordrechner (BR) und in Abhängigkeit der Akkumulatortemperatur wird, je nachdem, wie genau die Akkumulatortemperatur gemessen oder von z. B. der Außentemperatur abgeleitet wird, eine verbesserte Akkumulatorlebensdauer erreicht,
Zu b) Nach dem Start des Verbrennungsmotors ist es wichtig, daß der Akkumulator schnell wieder aufgeladen wird. Durch den Bordrechner kann für diesen Fall eine kurzzeitig hohe Spannungsvorgabe durch Bₛₑₙ eingegeben werden, bis, abhängig von der Akkumulatortemperatur, die erforderliche Akkumulatorspannung erreicht ist.
Zu c) Eine Absenkung der Bordnetz- und Akkumulatorspannung kann beispielsweise bereits nach 20 Minuten ununterbrochener Motorbetriebsdauer erfolgen, auch dann, wenn der Verbrennungsmotor nur im unteren Leerlauf betrieben und viel Strom angefordert wird, z. B. im Stau. Nur muß dann der Bordrechner bei normalem Fahrbetrieb wieder eine erhöhte Spannungsvorgabe Bₛₑₙ einstellen, was gut machbar ist.
Zu d) Ein bewußtes Entladen des Akkumulators nach längerer ununterbrochener Betriebsdauer und dann ein Wiederaufladen kann sehr positiv für die Akkumulatorlebensdauer sein, da viele Akkumulatortypen ein Entladen und ein anschließendes Aufladen, auch abhängig von der Akkumulatorbauart, zur Erhaltung ihrer Kapazität benötigen.
   Wenn z. B. eine ununterbrochene Motorbetriebsdauer von 60 Minuten in einem Betriebsdrehzahlbereich vom Bordrechner registriert ist, kann der Bordrechner mit weiterer ununterbrochener Betriebszeit rechnen (Autobahn). Der Bordrechner kann dann z. B. für 120 Minuten die Spannungsvorgabe Bₛₑₙ absenken und anschließend Bₛₑₙ wieder erhöhen, so daß der Akkumulator wieder aufgeladen wird.
Zu e) Es kann auch zusätzlich oder nur abhängig von den eingeschalteten Verbrauchern oder nur anhängig von den eingeschalteten Leuchtmitteln die Generatorspannung B+ abgesenkt werden, wenn z. B. der Betrieb des Verbrennungsmotors einen längeren Zeitanteil im unteren Leerlauf aufweist. Es muß dann aber, wenn der Verbrennungsmotor wieder im Teillast- oder Vollastbetrieb arbeitet, die Generatorspannung B+ entsprechend angehoben werden.
Zu f) Eine zusätzliche Spannungsanpassung von beispielsweise 3% ... 10% erhöhter Spannungsvorgabe Bₛₑₙ kann dann durch den Bordrechner erfolgen, wenn die Lage des Akkumulators von der Serienausführung abweicht. Dieser Fall ist oft bei Sonderfahrzeugen gegeben, bei denen der vorgesehene Platz für den Akkumulator für andere Einbauten benötigt wird.

Wenn der Ladezustand des Akkumulators bestimmt werden kann, z. B. wenn ein Sensor zur Bestimmung der Säuredichte des Akkumulators vorhanden ist, so kann der Ladezustand zusätzlich zur Bestimmung der Generatorspannung herangezogen werden.

In der Zeichnung ist ein Ausführungsbeispiel der Erfindung schematisch dargestellt.

### Es zeigen:

- Fig. 1: einen Schaltplan,
- Fig. 2: eine Spannungskurve,
- Fig. 3: den Stand der Technik.

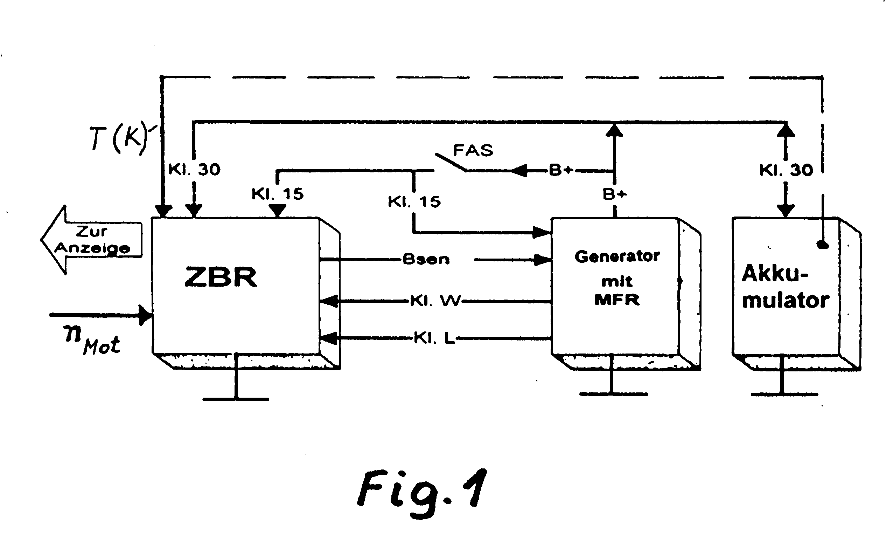

Die Fig. 1 zeigt den Schaltplan der erfindungsgemäßen Lösung. In den ZBR gehen die Daten von der Motordrehzahl des Verbrennungsmotors n_{Mot,} der Akkumulatorspannung Kl. 30, der Generatorspannung B+, die über den Fahranlassschalter FAS und Klemme Kl. 15 eingebbar ist, ein.

Weiterhin geht in den ZBR die Akkumulatortempertur T (K) ein, die am genauesten ist, wenn sie direkt gemessen wird. In der praktischen Anwendung wird man versuchen, die Akkumulatortemperatur von der Außentemperatur abzuleiten. Deshalb ist die Verbindungslinie zwischen Akkumulator und T (K) gestrichelt gezeichnet.

Ist der Ladezustand des Akkumulators direkt bestimmbar, z. B. wenn ein Sensor zur Bestimmung der Säuredichte des Akkumulators (nicht gezeichnet) vorhanden ist, so kann das Signal des Sensors zusätzlich mit den weiteren Signalen eine verbesserte Spannungsvorgabe Bₛₑₙ ergeben.

Mit den genannten eingehenden Daten in den ZBR und weiteren vorhandenen Daten im ZBR ist über die Leitung Bₛₑₙ der Generator mit MFR so steuerbar, daß die Akkumulatorlebensdauer wesentlich verlängert werden kann und dabei die Leistungsanforderung an den Generator minimiert ist.

Ein positiver Effekt dieser Regelung ist, daß durch eine absenkbare Bordnetzspannung beispielsweise Beleuchtungsmittel eine längere Betriebslebensdauer haben können.

Durch das Hinführen der Werte der Klemmen Kl. W und Kl. L in den ZBR und der im ZBR vorhandenen Werte der aktuellen Motordrehzahl und der aktuellen Generatorausgangsspannung B+, kann der ZBR Fehler des Generators bzw. des Reglers wieder differenzieren. Dadurch wird die Diagnosetiefe erhöht.

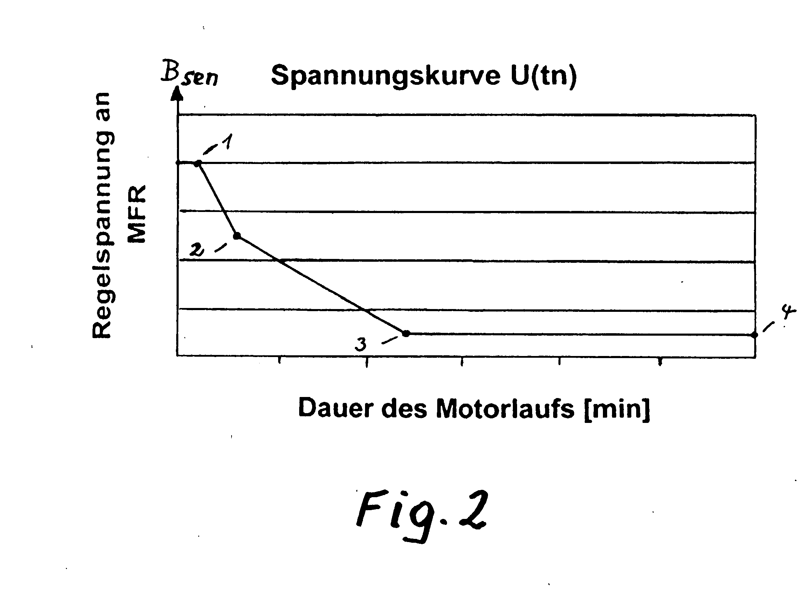

Die Fig. 2 zeigt den Verlauf der Spannungsvorgabe Bₛₑₙ bzw. der Regelspannung Bₛₑₙ an den MFR, abhängig von der ununterbrochenen Motorbetriebsdauer des Verbrennungsmotors, wie dies der ZBR vorgeben könnte. Gleich nach dem Motorstart wird kurzzeitig eine relativ hohe Spannungsvorgabe Bₛₑₙ eingestellt, bis Punkt 1. Anschließend kann Bₛₑₙ relativ stark fallen, bis Punkt 2 und dann langsamer fallen bis Punkt 3. Im Punkt 3 ist die Spannung Bₛₑₙ vorgegeben, die für die Akkumulatortemperatur die geeignete Generatorspannung B+ ergibt. Ein weiteres Absenken von Bₛₑₙ um den Akkumulator zu entladen, ist in der Fig. 2 nicht enthalten.

Wenn die ununterbrochene Motorbetriebsdauer (Dauer des Motorlaufs) den Punkt 4 überschreitet, beginnt die Spannungsregelung wieder von Anfang an, also vor Punkt 1. Wenn der Motorbetrieb zwischen den Punkten 1 und 4 unterbrochen wird, beginnt beim Wiederstart des Motors die Spannungsregelung wieder vor Punkt 1, so daß in allen Betriebsfällen ein geschlossener Zyklus gegeben ist.

Die Fig. 3 zeigt den Stand der Technik. Das geschlossene Regelsystem zwischen MFR, Generator G und Akkumulator ist gut erkennbar. Durch diese Geschlossenheit ist das System nicht flexibel.

## Patentansprüche

1. Spannungsregelung für den Drehstromgenerator eines Kraftfahrzeuges mit Verbrennungsmotor, mit einem Multifunktionsregler (MFR) zur Regelung der Generatorspannung, mit einem zentralen Bordrechner (ZBR) oder gleichwertigem Rechner, der die Klemmenspannung des Akkumulators, die Ausgangsspannung des Generators und die Drehzahl des Verbrennungsmotors als Eingangssignale hat und die Spannungsvorgabe (Bₛₑₙ) für den Multifunktionsregler (MFR) zur Regelung der Ausgangsspannung (B+) des Generators vom zentralen Bordrechner (ZBR) oder gleichwertigen Rechner erfolgt,
**dadurch gekennzeichnet, dass** die Werte der Klemmen W und L (KI. W, KI. L), über die ein Defekt im Multifunktionsregler oder im Generator durch den zent ralen Bordrechner (ZBR) lokalisierbar und als Signal ausgebbar ist, in den zentralen Bordrechner (ZBR) eingegeben werden, und dass die Spannungs vorgabe (Bₛₑₙ) in Abhängigkeit der ununterbrochenen Betriebsdauer des Verbrennungsmotors änderbar ist.

2. Spannungsregelung nach Anspruch 1,
**dadurch gekennzeichnet, daß** als Parameter für die Spannungsvorgabe (Bₛₑₙ) für den Multifunktionsregler (MFR) zur Regelung der Ausgangsspannng (B+) des Generators vom zentralen Bordrechner (ZBR) oder gleichwertigen Rechner die gemessene oder indirekt ermittelte Akkumulatortemperatur verwendet wird und gegebenenfalls weitere fahrzeugspezifische und/oder betriebsspezi fische Daten zur Errechnung der Spannungsvorgabe (Bₛₑₙ) verwendet werden.

3. Spannungsregelung nach Anspruch 2, **dadurch gekennzeichnet, daß** die indirekt ermittelte Akumulatortemperatur von der Außentemperatur ableitbar ist.

4. Spannungsregelung nach Anspruch 2, **dadurch gekennzeichnet, daß** als fahrzeugspezifisches Datum eine von einem festgelegten seriellen Ausbaustand abweichender Leitungswiderstand oder ein entsprechender Spannungsabfall zwischen Generator und Akkumulator als Parameter einbringbar ist.

5. Spannungsregelung nach den Ansprüchen 1 und 2, **dadurch gekennzeichnet, daß** bei Ausfall der Spannungsvorgabe (Bₛₑₙ) der Multifunktionsregler mit seiner eigenen, bekannten Regelung die Generatorregelung übernimmt.

6. Spannungsregelung nach Anspruch 5, **dadurch gekennzeichnet, daß** der Ausfall der Spannungsvorgabe (Bₛₑₙ) im zentralen Bordrechner (ZBR) ablegbar und in der Armaturentafel anzeigbar ist.

7. Spannungsregelung nach den Ansprüchen 1 und 2, **dadurch gekennzeichnet, daß** der Spannungsverlauf (Fig. 2) zyklisch geschaltet ist, wenn die für den Spannungsverlauf vorgesehene, ununterbrochene Motorbetriebsdauer überschritten wird oder wenn die für den Spannungsverlauf vorgesehene ununterbrochene Motorbetriebsdauer nicht erreicht wird, wird der Spannungsverlauf beim erneuten Startvorgang von vorne beginnend geschaltet.

8. Spannungsregelung nach den Ansprüchen 1 und 2, **dadurch gekennzeichnet, daß**, abhängig von den eingeschalteten Verbrauchern, beispielsweise von Leuchtmitteln, die Generatorspannung B+ absenkbar ist.

9. Spannungsregelung nach den Ansprüchen 1 und 2, **dadurch gekennzeichnet, daß** über die Klemmen W und L (KL. W, KL. L) und über Verschleißdaten des Generators der Zustand des Generators beurteilbar ist.

10. Spannungsregelung nach Anspruch 2, **dadurch gekennzeichnet, daß**, wenn der Ladezustand des Akkumulators bestimmbar oder ein Sensor zur Bestimmung der Säuredichte des Akkumulators vorhanden ist, der Ladezustand zusätzlich zur Akkumulatortemperatur für die Spannungsvorgabe Bₛₑₙ verwendet wird.

## Claims

1. Voltage regulator for the three-phase alternator of a motor vehicle with a combustion engine, with a multifunction controller (MFR) to control the alternator voltage, with a central on-board computer (ZBR) or an equivalent computer that has the terminal voltage of the accumulator, the output voltage of the alternator and the engine speed of the combustion engine as input signals and the voltage selection (Bₛₑₙ) for the multifunction controller (MFR) to control the output voltage (B+) of the alternator stems from the central on-board computer (ZBR) or equivalent computer,
**characterised in that** the values of terminals W and L (KI. W, KI. L), via which a defect in the multifunction controller or in the alternator can be found by the on-board computer (ZBR) and be issued as a signal, are entered into the central on-board computer (ZBR), and **in that** the voltage selection (Bₛₑₙ) can be changed in accordance with the uninterrupted operating duration of the combustion engine.

2. Voltage regulator according to claim 1,
**characterised in that** the central on-board computer (ZBR) or equivalent computer uses the measured or indirectly determined accumulator temperature as the parameter for the voltage selection (Bₛₑₙ) for the multifunction controller (MFR) to control the output voltage (B+) of the alternator and, if applicable, other vehicle-specific and/or operation-specific data are used to calculate the voltage selection (Bₛₑₙ).

3. Voltage regulator according to claim 2, **characterised in that** the indirectly determined accumulator temperature can be derived from the outside temperature.

4. Voltage regulator according to claim 2, **characterised in that** a line resistance that differs from a stipulated series-production state of development can be provided as a vehicle-specific item of data or a corresponding voltage drop between the alternator and the accumulator can be provided as a parameter.

5. Voltage regulator according to claims 1 and 2, **characterised in that** when the voltage selection (Bₛₑₙ) fails, the multifunction controller assumes alternator control with its own known regulator.

6. Voltage regulator according to claim 5, **characterised in that** failure of the voltage selection (Bₛₑₙ) can be stored in the central on-board computer (ZBR) and displayed on the dashboard.

7. Voltage regulator according to claims 1 and 2, **characterised in that** the voltage characteristics (fig. 2) are cyclically switched if the uninterrupted engine operating time provided for the voltage characteristics is exceeded or if the uninterrupted engine operating time provided for the voltage characteristics is not reached, the voltage characteristics are switched starting from the beginning in the new start process.

8. Voltage regulator according to claims 1 and 2, **characterised in that**, depending on the switched-on consuming units, for example lamps, the alternator voltage B+ can be reduced.

9. Voltage regulator according to claims 1 and 2, **characterised in that** the status of the alternator can be assessed via terminals W and L (KI. 2, KI. L) and via wear data of the alternator.

10. Voltage regulator according to claim 2, **characterised in that**, if the charge status of the accumulator can be determined or a sensor to determine the acid density of the accumulator is available, the charge status is used in addition to the accumulator temperature for the voltage selection Bₛₑₙ.

## Revendications

1. Régulation de la tension pour l'alternateur triphasé d'un véhicule automobile avec moteur à combustion interne, avec un régulateur multifonctions (MFR) pour la régulation de la tension de l'alternateur, avec un ordinateur de bord central (ZBR) ou un ordinateur équivalent, qui a comme signaux d'entrée la tension aux bornes de l'accumulateur, la tension de sortie de l'alternateur et le régime du moteur à combustion interne, et dont l'ordinateur de bord central (ZBR) ou l'ordinateur équivalent fournit la consigne de tension (Bₛₑₙ) pour le régulateur multifonctions (MFR) pour la régulation de la tension de sortie (B+) de l'alternateur, **caractérisée en ce que** le valeurs des bornes W et L (KI. W, KI. L), par le biais desquelles une défectuosité du régulateur multifonctions ou de l'alternateur peut être localisée et fournie sous forme de signal par l'ordinateur de bord central (ZBR), sont introduites dans l'ordinateur de bord central (ZBR) et que la consigne de tension (Bₛₑₙ) est variable en fonction de la durée de fonctionnement ininterrompue du moteur à combustion interne.

2. Régulation de la tension selon la revendication 1, **caractérisée en ce que** le paramètre utilisé par l'ordinateur de bord central (ZBR) ou par l'ordinateur équivalent pour la consigne de tension (Bₛₑₙ) pour le régulateur multifonctions (MFR) pour la régulation de la tension de sortie (B+) de l'alternateur est la température de l'accumulateur relevée ou déterminée de manière indirecte et que d'autres données spécifiques au véhicule et/ou au fonctionnement sont utilisées, le cas échéant, pour le calcul de la consigne de tension (Bₛₑₙ).

3. Régulation de la tension selon la revendication 2, **caractérisée en ce que** la température de l'accumulateur déterminée de manière indirecte peut être déduite de la température extérieure.

4. Régulation de la tension selon la revendication 2, **caractérisée en ce qu'**une résistance de câble divergeant de l'état de construction de série défini ou une chute de tension correspondante entre l'alternateur et l'accumulateur peut être prise en considération sous forme de paramètre comme donnée spécifique au véhicule.

5. Régulation de la tension selon les revendications 1 et 2, **caractérisée en ce qu'**en cas de défaillance de la consigne de tension (Bₛₑₙ), le régulateur multifonctions assume la régulation de l'alternateur avec sa propre régulation connue.

6. Régulation de la tension selon la revendication 5, **caractérisée en ce que** la défaillance de la consigne de tension (Bₛₑₙ) peut être stockée dans l'ordinateur de bord central (ZBR) et affichée au tableau de bord.

7. Régulation de la tension selon les revendications 1 et 2, **caractérisée en ce que** la courbe de tension (fig. 2) est commandée de manière cyclique, en cas de dépassement de la durée de fonctionnement ininterrompue du moteur prévue pour la courbe de tension ou lorsque la durée de fonctionnement ininterrompue du moteur prévue pour la courbe de tension n'est pas atteinte, la régulation de la tension recommence au point de départ lors du redémarrage du moteur.

8. Régulation de la tension selon les revendications 1 et 2, **caractérisée en ce que** la tension de l'alternateur B+ peut être diminuée en fonction des consommateurs enclenchés, par exemple des moyens d'éclairage.

9. Régulation de la tension selon les revendications 1 et 2, **caractérisée en ce que** l'état de l'alternateur peut être évalué par le biais des bornes W et L (KI. W, KI. L) et des données d'usure de l'alternateur.

10. Régulation de la tension selon la revendication 2, **caractérisée en ce que** l'état de charge est utilisé, en plus de la température de l'accumulateur, pour la consigne de tension (Bₛₑₙ) lorsque l'état de charge de l'accumulateur peut être déterminé ou qu'un capteur destiné à déterminer la densité de l'acide de l'accumulateur est posé.
